# EUROPEAN PATENT APPLICATION

(11) **EP 3 916 862 A1**
(43) Date of publication of application: **01.12.2021**
(21) Application number: 20906914.5
(22) Date of filing: 23.12.2020
(51) Int. Cl.: H01M 4/66, H01M 4/139, H01M 10/0525, H01M 10/42, A62C 3/16

(54) **CURRENT COLLECTOR, PREPARATION METHOD THEREFOR AND APPLICATION THEREOF**

(30) Priority: 26.12.2019 CN 201911368888
(71) Applicant: Zhuhai CosMX Battery Co., Ltd., Zhuhai, Guangdong 519180 (CN)
(72) Inventor: ZHAO, Wei, Zhuhai, Guangdong 519180 (CN); LI, Suli, Zhuhai, Guangdong 519180 (CN); LI, Junyi, Zhuhai, Guangdong 519180 (CN); XU, Yanming, Zhuhai, Guangdong 519180 (CN)
(74) Representative: Elzaburu S.L.P.
(86) International application number: PCT/CN2020/138534
(87) International publication number: WO 2021/129643

(57) **Abstract**

The present invention provides a current collector and a preparation method thereof and an application therefor. The current collector provided by the present invention includes a functional film layer and metal layers provided on an upper surface and a lower surface of the functional film layer, where the functional film layer includes a fire retardant. Due to an addition of the fire retardant in the functional film layer, the current collector and the preparation method thereof provided by the present invention can not only effectively decrease an ignition point, but also release the fire retardant from the current collector to an electrolyte at high temperature, so as to achieve an effect of active fire extinguishing and significantly improve a safety performance of a battery; the functional film layer can also carry the metal layers on the upper and lower surfaces thereon, which reduces a weight of the current collector and improves an energy density of the battery.

## Description

### TECHNICAL FIELD

The present invention relates to the technical field of lithium-ion batteries, and in particular, to a current collector and a preparation method thereof and an application therefor.

### BACKGROUND

Due to characteristics of high energy density and high-power density, lithium-ion batteries have a broad application prospect. For example, the lithium-ion battery has been widely used in consumer electronics, electric vehicles, energy storage and other fields.

A current collector of a conventional lithium-ion battery is made of metal foil, a positive electrode is usually made of aluminum foil, and a negative electrode is usually made of copper foil. Under some abuse conditions (such as acupuncturing, squeezing, striking, etc.), an internal short circuit of this conventional lithium-ion battery will cause safety accidents, which will cause great potential safety hazard to the use of the lithium-ion battery.

Therefore, how to improve a safety performance of the lithium-ion battery has attracted more and more attention.

### SUMMARY

The present invention provides a current collector and a preparation method thereof, which is used to solve a problem of low safety performance of a lithium-ion battery in the prior art.

The present invention provides a current collector, the current collector includes a functional film layer, a metal layer provided on an upper surface of the functional film layer and a metal layer provided on a lower surface of the functional film layer;
where the functional film layer includes a fire retardant.

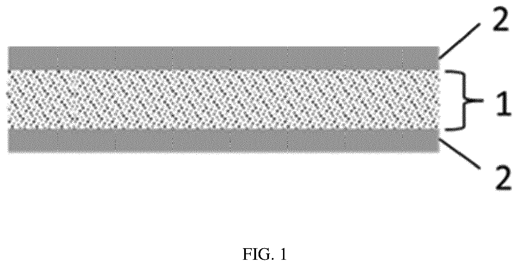

FIG. 1 is a sectional structure diagram of a current collector provided by the present invention, as shown in FIG. 1, the current collector includes the functional film layer 1 and the metal layers 2 provided on the upper and lower surfaces of the functional film layer 1. Those skilled in the art can use an existing method to provide the metal layers on the upper and lower surfaces of the functional film layer. The functional film layer is not only used to carry the conductive metal layers on the upper and lower surfaces thereof, but also can replace a part of conventional metal current collectors, which reduces a weight of the current collector and further improves an energy density of a lithium-ion battery. In addition, the functional film layer in the current collector of the present invention includes a fire retardant. In an actual preparation process, the fire retardant can be mixed with other components of the functional film layer to obtain a slurry, and the slurry can be extended to obtain the functional film layer. Because of the fire retardant contained in the functional film layer, an ignition point of the current collector can be decreased, and the fire retardant can be released from the current collector to an electrolyte at high temperature to achieve an effect of active fire extinguishing, which significantly improves a safety performance of the battery.

In a specific implementation manner, the fire retardant is selected from one or more of antimony trioxide, magnesium hydroxide, aluminum hydroxide, hydroxyl-aluminum, zinc phosphate, zinc borate, ammonium polyphosphate, tributyl phosphate, tris(2-ethylhexyl) phosphate, tris(2-chloroethyl) phosphate, tris(2,3-dichloropropyl) phosphate, tris(2,3-dibromopropyl) phosphate, cresyl diphenyl phosphate, tricresyl phosphate, triphenyl phosphate, 2-ethylhexyl diphenyl phosphate, tris(dibromopropyl) phosphate, octabromodiphenyl oxide, pentabromoethylbenzene, tetrabromobisphenol A, chlordane anhydride, cyclophosphamide polymer, melamine urate, melamine polyphosphate, pentaerythritol phosphate, and tris(2,4,6-tribromophenoxy)-triazine.

In consideration of the safety performance and preparation cost of the battery, a mass of the fire retardant in the functional film layer is 0.1%-10% of a mass of the functional film layer. Furthermore, the mass of the fire retardant is 1-10% of the mass of the functional film layer.

In the current collector provided by the present invention, in addition to the fire retardant, the functional film layer can further include a polymer. The functional film layer is obtained by extending a slurry containing the fire retardant and the polymer as a raw material of the functional film layer. The polymer, as a substrate material of the functional film layer, can cut off the current in case of short circuit inside of the battery, and the safety performance of the battery is improved to a certain extent.

The polymer is selected from one or more of polyolefin, polyurethane, polyamide, polyester, polyether and other heterochain polymer including carbon element on the main chain, and an organic polymer that does not include carbon element on the main chain.

Further, the polymer is selected from one or more of polyethylene, polypropylene, polystyrene, polyvinyl chloride, polystyrene, acrylonitrile-butadiene-styrene copolymer, polyvinyl formal, polyvinyl butyral, polyacrylonitrile, polyvinyl acetate, phenolic resin, polyurethane, polyamide, polyimide, poly-p-phenylene terephthalamide, polyterephthalate, polyethylene glycol terephthalate, polybutylene terephthalate, polycarbonate, polyphenylether, polyformaldehyde, epoxy resin, polytetrafluoroethylene, polyvinylidene fluoride, polysulfone, polyethersulfone and silicone rubber.

Alternatively, the polymer is selected from one or more of polyethylene glycol terephthalate, polybutylene terephthalate, polyamide, polyethylene, polypropylene, polyvinylidene fluoride and polyvinyl chloride.

Those skilled in the art can select a specific fire retardant and polymer by themselves, and make a reasonable proportion within the above range, and mix the fire retardant and polymer according to a selected proportion to obtain a slurry and perform extending processing to obtain the functional film layer.

In order to ensure a weight of the current collector and the performance of the lithium-ion battery, it is necessary to control a thickness of the functional film layer when extending. In a specific implementation manner, the thickness of the functional film layer can be controlled to 1-20 µm; furthermore, the thickness of the functional film layer is 3-10 µm.

The fire-retardant grade of the above-mentioned functional film layer was tested through a vertical combustion method according to UL94 standard, and the fire-retardant grade is higher than V2 grade; an oxygen index of the functional film layer was tested according to GBT 2406.1-2008 standard, and the oxygen index was higher than 26.

After obtaining the functional film layer, it is necessary to provide metal layers on the upper and lower surfaces of the functional film layer. Specifically, the metal layer is selected from one or more of aluminum, copper, nickel, titanium, silver, stainless steel, nickel copper alloy and aluminum zirconium alloy.

The metal layers can be provided on the upper and lower surfaces of the functional film layer by those skilled in the art according to an existing technology. Specifically, one or more of mechanical pressing, bonding, vapor deposition, chemical vapor deposition and electroplating can be chosen.

Among them, the physical vapor deposition method can be chosen for the vapor deposition method, one or more of evaporation method and sputtering method can be chosen for the physical vapor deposition method, one or more of vacuum evaporation method, thermal evaporation method and electron beam evaporation method can be chosen for the evaporation method, and the magnetron sputtering method can be chosen for the sputtering method.

Similarly, a thickness of the metal layer needs to be controlled when providing the metal layer. In one specific implementation manner, the thickness of the metal layer is 0.1-10 µm; furthermore, the thickness of the metal layer is 0.5-2 µm.

The present invention provides a current collector including a functional film layer and a metal layer provided on an upper surface of the functional film layer and a metal layer provided on a lower surface of the functional film layer. The functional film layer is used to carry the metal layer on the upper surface of the functional film layer and the metal layer on lower surface of the functional film layer, and the setting of the functional film layer can reduce a weight of the current collector and further improve an energy density of the lithium-ion battery; where the functional film layer includes a fire retardant, which can decrease an ignition point of the current collector, and the fire retardant can be released from the current collector to an electrolyte at high temperature, thus achieving an effect of active fire extinguishing, and significantly improving the safety performance of the battery.

In another aspect, the present invention further provides a preparation method of a current collector, including the following steps:
1) extending a slurry containing a fire retardant to obtain a functional film layer;
2) providing a metal layer on an upper surface of the functional film layer and a metal layer on a lower surface of the functional film layer to obtain a current collector.

The present invention provides a preparation method of current collector, firstly, the slurry containing fire retardant is extended to obtain the functional film layer; secondly, a metal layer is provided on the upper surface of the functional film layer and a metal layer is provided on the lower surface of the functional film layer to obtain the current collector. Due to the fire retardant contained in the functional film layer, the current collector obtained according to the above preparation method can decrease the ignition point of the current collector, and the fire retardant can be released from the current collector into the electrolyte at high temperature to achieve the effect of active fire extinguishing, which significantly improves the safety performance of the battery; moreover, the setting of the functional film layer replaces a conventional metal current collector, reduces the weight of the current collector, and further improves the energy density of the lithium-ion battery.

Furthermore, the slurry in step 1) further includes a polymer. The functional film layer is obtained by extending a slurry containing the fire retardant and the polymer as a raw material of the functional film layer. The polymer, as a substrate material of the functional film layer, can cut off the current in case of short circuit inside of the battery, and the safety performance of the battery is improved to a certain extent.

The types and amounts of the fire retardant and polymer are the same as those mentioned above, and will not be described here again.

In order to ensure the weight of the current collector and the performance of lithium-ion battery, it is necessary to control the thickness of the functional film layer when extending. For example, the thickness of the function film layer is controlled to 1-20 µm.

The fire-retardant grade of the prepared functional film layer was tested through a vertical burning method according to UL94 standard, the fire-retardant grade is higher than V2 grade; an oxygen index was tested according to GBT 2406.1-2008 standard, and the oxygen index is higher than 26.

In a specific implementation manner, step 1) can specifically include: melting and mixing the polymer and the fire retardant to obtain the slurry, extruding, stretching and cooling the slurry in turn to obtain the functional film layer.

In the present implementation manner, the selected polymer and fire retardant are melted and mixed at a certain temperature, so that the polymer and fire retardant are evenly mixed to obtain a slurry, and then the slurry is extruded, stretched and cooled in turn to obtain the functional film layer.

Specifically, an extrusion equipment can be used for extruding, and a biaxial stretching equipment can be used for stretching, there is no special requirement as long as it can be cooled to room temperature.

In another implementation manner, step 1) can specifically include: dissolving the polymer and fire retardant in a solvent to obtain the slurry, coating and drying the slurry in turn to obtain the functional film layer.

In the present implementation manner, the selected polymer can be dissolved in the solvent to form a solution, then a certain amount of fire retardant can be added, and the slurry can be obtained after mixing and stirring, and the slurry can be coated and dried in turn to obtain a functional film layer.

Specifically, during the coating process, the slurry needs to be coated on a substrate, and after the solvent is dry, the substrate is peeled off to obtain the functional film layer.

After the functional film layer is obtained according to the above method, a metal layer is provided on the upper surface of the functional film layer and a metal layer is provided on the lower surface of the functional film layer by at least one way of mechanical pressing, bonding, vapor deposition, chemical vapor deposition and electroplating.

Specifically, the physical vapor deposition method can be chosen for the vapor deposition method, one or more of evaporation method and sputtering method can be chosen for the physical vapor deposition method, one or more of vacuum evaporation method, thermal evaporation method and electron beam evaporation method can be chosen for the evaporation method, and the magnetron sputtering method can be chosen for the sputtering method.

Among them, a material and thickness of the metal layer are the same as those mentioned above, and will not be described here again.

Through the preparation method of the current collector provided by the present invention, firstly, the functional film layer can be obtained by extending the slurry containing fire retardant and controlling its thickness. Then, the metal layer with a certain thickness is provided on the upper surface of the functional film layer and the metal layer with a certain thickness is provided on the lower surface of the functional film layer to obtain the current collector. Due to the fire retardant contained in the functional film layer, the current collector obtained according to the above preparation method can decrease the ignition point of the current collector and the fire retardant can be released from the current collector into the electrolyte at high temperature to achieve the effect of active fire extinguishing, which significantly improves the safety performance of the battery; secondly, providing the metal layers on the upper and lower surfaces of the functional film layer replaces the conventional metal current collector, this reduces the weight of the current collector and further improves the energy density of the lithium-ion battery.

In yet another aspect, the present invention further provides a lithium-ion battery, the lithium-ion battery includes a current collector as described in any one of the above or a current collector obtained by any one preparation method as described above.

The lithium-ion battery provided by the present invention can be prepared by those skilled in the art by combining the current collector provided in the present application with the existing lithium-ion battery preparation process. The current collector includes a functional film layer and a metal layer provided on an upper surface of the functional film layer and a metal layer provided on a lower surface of the functional film layer, and the functional film layer includes a fire retardant. Due to the functional film layer includes the fire retardant, the ignition point of the current collector can be decreased, and the fire retardant can be released from the current collector to the electrolyte at high temperature, which can achieve the effect of active fire extinguishing, and significantly improves the safety performance of the battery; secondly, the functional film layer can carry the metal layers on the upper and lower surfaces thereon, which reduces the weight of the current collector and further improves the energy density of the lithium-ion battery.

The implementation manners of the present invention have at least the following advantages:
1. the weight of the current collector is reduced by using the functional film layer to carry the metal layers, which benefits to increase the energy density of the battery;
2. the functional film layer contains the fire retardant, which can not only decrease the ignition point of the current collector, but also release the fire retardant from the current collector to the electrolyte at high temperature, thus achieving the effect of active fire extinguishing, and significantly improving the safety performance of the battery.
3. the safety performance of the battery prepared by the current collector is outstanding, especially in the improvement of the pass rate of acupuncturing safety test, the pass rate of heating safety test and the pass rate of overcharging safety test.

### BRIEF DESCRIPTION OF DRAWINGS

FIG. 1 is a sectional structure diagram of a current collector provided by the present invention.
1: Functional film layer; 2: Metal layer.

### DESCRIPTION OF EMBODIMENTS

In order to make the object, technical scheme and advantages of the present invention clearer, the technical scheme in the embodiment of the present invention will be described clearly and completely in combination with the embodiment of the present invention. Obviously, the described embodiment is a part of the embodiment of the present invention, not all of the embodiments. Based on the embodiments in the present invention, all other embodiments obtained by those of ordinary skill in the art without creative work belong to the protection scope of the present invention.

A molecular weight of the polymer used in each embodiment of the present invention is as follows:
an average molecular weight of polyethylene glycol terephthalate (PET) is 31,000; an average molecular weight of polypropylene (PP) is 400,000; an average molecular weight of polybutylene terephthalate (PBT) is 38,000; an average molecular weight of polyvinylidene fluoride (PVDF) is 900,000; an average molecular weight of polyvinyl chloride (PVC) is 120,000.

The polyethylene (PE) porous membrane used in the preparation of the lithium-ion battery is wet-process polyethylene porous membrane ND12 with a thickness of 12 µm, which is produced by Shanghai Energy New Materials Technology Co., Ltd.; an electrolyte of the lithium-ion battery is LBC445B33 electrolyte of Shenzhen Capchem Technology., Ltd.

### Example 1

In the current collector provided by the present embodiment, the functional film layer is obtained from 90 parts of polyethylene glycol terephthalate (PET) and 10 parts of antimony trioxide, and metal aluminum layers are provided on an upper surface and a lower surface of the functional film layer used as a positive electrode current collector material, and metal copper layers are provided on the upper surface and a lower surface of the functional film layer used as a negative electrode current collector material.

The current collector can be prepared according to the method as follows:
1) 90 parts of polyethylene glycol terephthalate (PET) and 10 parts of antimony trioxide were melted and mixed at 265°C for 20 min to obtain a mixed slurry. The mixed slurry was extruded, stretched and cooled in turn to obtain a functional film layer with a thickness of 1 µm.
   after testing, a fire-retardant grade of the functional film layer is V1 grade, and an oxygen index is 28.
2) the upper surface and the lower surface of the functional film layer were respectively electroplated with a metal aluminum layer with a thickness of 2 µm by the vacuum evaporation method to obtain a current collector A1 with a total thickness of 5 µm used as a positive electrode current collector material;
   the upper surface and the lower surface of the functional film layer were respectively electroplated with a metal copper layer with a thickness of 2 µm by the vacuum evaporation method to obtain a current collector B 1 with a total thickness of 5 µm used as a negative electrode current collector material.

After the positive and negative electrode current collector materials were obtained according to the above method, 97 parts of lithium cobalt oxide positive electrode, 1.5 parts of acetylene black conductive agent, 1.5 parts of PVDF binder, and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A1 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of graphite negative electrode, 1 part of acetylene black conductive agent, 1 part of sodium carboxymethyl cellulose (CMC), 1 part of styrene butadiene rubber (SBR) binder, and 100 parts of deionized water were stirred in a dual planet mixer under a condition of 30 r/min revolution and 1,500 r/min rotation for 4 h in vacuum to form a uniform slurry, then the slurry was coated on the current collector B1 and baked at 100°C for 30 min to dry, rolled under 40 tons of rolling pressure and cut into a required negative electrode sheet.

### Comparative Example 1

An aluminum foil current collector with a thickness of 5 µm was used to replace the current collector A1, a copper foil current collector with a thickness of 5 µm was used to replace the current collector B1. And a positive electrode sheet and a negative electrode sheet were obtained by using the same material and preparation process as in Example 1.

### Comparative Example 1-2

1) 100 parts of polyethylene glycol terephthalate (PET) was melted and mixed at 265°C for 20 min to obtain a slurry. The slurry was extruded, stretched and cooled in turn to obtain a PET film layer with a thickness of 1 µm.
2) the upper surface and the lower surface of the PET film layer were respectively electroplated with a metal aluminum layer with a thickness of 2 µm by the vacuum evaporation method to obtain a current collector C1 with a total thickness of 5 µm used as a positive electrode current collector material.
   the upper surface and the lower surface of the PET film layer were respectively electroplated with a metal cooper layer with a thickness of 2 µm by a vacuum evaporation method to obtain a current collector D1 with a total thickness of 5 µm used as a negative electrode current collector material.

The current collector C1 was used to replace the current collector A1, the current collector D1 was used to replace the current collector B1. And a positive electrode sheet and a negative electrode sheet were obtained by using the same material and preparation process as in Example 1.

### Examples 2-1

In the current collector provided by the present embodiment, the functional film layer is obtained from 99 parts of polypropylene (PP) and 1 part of zinc phosphate, and metal aluminum layers were provided on an upper surface and a lower surface of the functional film layer used as a positive electrode current collector material, and metal copper layers were provided on the upper surface and the lower surface of the functional film layer as a negative electrode current collector material.

The current collector can be prepared according to the method as follows:
1) 99 parts of polypropylene (PP) and 1 part of zinc phosphate were melted and mixed at 170°C for 30 min to obtain a mixed slurry. The mixed slurry was extruded, stretched and cooled in turn to obtain a functional film layer with a thickness of 5 µm.
   after testing, a fire-retardant grade of the functional film layer is V2 grade, and an oxygen index is 26.
2) both sides of the functional film layer were respectively electroplated with a metal aluminum layer with a thickness of 2 µm by the vacuum evaporation method to obtain a current collector A2-1 with a total thickness of 9 µm used as a positive electrode current collector material.

Both sides of the functional film layer were respectively electroplated with a metal copper layer with a thickness of 2 µm by the vacuum evaporation method to obtain a current collector B2-1 with a total thickness of 9 µm used as a negative electrode current collector material.

After the positive and negative electrode current collector materials were obtained according to the above method, 97 parts of lithium cobalt oxide positive electrode, 1.5 parts of acetylene black conductive agent, 1.5 parts of PVDF binder, and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A2-1 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of graphite negative electrode, 1 part of acetylene black conductive agent, 1 part of sodium carboxymethyl cellulose (CMC), 1 part of styrene butadiene rubber (SBR) binder, and 100 parts of deionized water were stirred in a dual planet mixer under a condition of 30 r/min revolution and 1,500 r/min rotation for 4 h in vacuum to form a uniform slurry, then the slurry was coated on the current collector B2-1 and baked at 100°C for 30 min to dry, rolled under 40 tons of rolling pressure and cut into a required negative electrode sheet.

### Example 2-2

In the current collector provided by the present embodiment, the functional film layer was obtained from 95 parts of polypropylene (PP) and 5 parts of zinc phosphate, metal aluminum layers were provided on an upper surface and a lower surface of the functional film layer used as a positive electrode current collector material, and metal copper layers were provided on the upper surface and the lower surface of the functional film layer as a negative electrode current collector material.

The current collector can be prepared according to the method as follows:
1) 95 parts of polypropylene (PP) and 5 parts of zinc phosphate were melted and mixed at 170°C for 30 min to obtain a mixed slurry. The mixed slurry was extruded, stretched and cooled in turn to obtain a functional film layer with a thickness of 5 µm.
   after testing, a fire-retardant grade of the functional film layer is V1 grade, and an oxygen index is 28.
2) the upper surface and the lower surface of the functional film layer were respectively electroplated with a metal aluminum layer with a thickness of 2 µm by a vacuum evaporation method to obtain a current collector A2-2 with a total thickness of 9 µm used as a positive electrode current collector material.
   the upper surface and the lower surface of the functional film layer were respectively electroplated with a metal copper layer with a thickness of 2 µm to obtain a current collector B2-2 with a total thickness of 9 µm used as a negative electrode current collector material.

After the positive and negative electrode current collector materials were obtained according to the above method, 97 parts of lithium cobalt oxide positive electrode, 1.5 parts of acetylene black conductive agent, 1.5 parts of PVDF binder, and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A2-2 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of graphite negative electrode, 1 part of acetylene black conductive agent, 1 part of sodium carboxymethyl cellulose (CMC), 1 part of styrene butadiene rubber (SBR) binder, and 100 parts of deionized water were stirred in a dual planet mixer under a condition of 30 r/min revolution and 1,500 r/min rotation for 4 h in vacuum to form a uniform slurry, then the slurry was coated on the current collector B2-2 and baked at 100°C for 30 min to dry, rolled under 40 tons of rolling pressure and cut into a required negative electrode sheet.

### Examples 2-3

In the current collector provided by the present embodiment, the functional film layer was obtained from 90 parts of polypropylene (PP) and 10 parts of zinc phosphate, and metal aluminum layers were provided on the upper surface and the lower surface of the functional film layer used as a positive electrode current collector material, and metal copper layers were provided on the upper surface and the lower surface of the functional film layer as a negative electrode current collector material.

The current collector can be prepared according to the method as follows:
1) 90 parts of polypropylene (PP) and 10 parts of zinc phosphate were melted and mixed at 170°C for 30 min to obtain a mixed slurry. The mixed slurry was extruded, stretched and cooled in turn to obtain a functional film layer with a thickness of 5 µm.
   after testing, a fire-retardant grade of the functional film layer F2-3 is V0 grade, and an oxygen index is 29.
2) the upper surface and the lower surface of the functional film layer were respectively electroplated with a metal aluminum layer with a thickness of 2 µm by a vacuum evaporation method to obtain a current collector A2-3 with a total thickness of 9 µm used as a positive electrode current collector material.
   the upper surface and the lower surface of the functional film layer were respectively electroplated with a metal copper layer with a thickness of 2 µm by a vacuum evaporation method to obtain a current collector B2-3 with a total thickness of 9 µm used as a negative electrode current collector material.

After the positive and negative electrode current collector materials were obtained according to the above method, 97 parts of lithium cobalt oxide positive electrode, 1.5 parts of acetylene black conductive agent, 1.5 parts of PVDF binder and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A2-3 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of graphite negative electrode, 1 part of acetylene black conductive agent, 1 part of sodium carboxymethyl cellulose (CMC), 1 part of styrene butadiene rubber (SBR) binder, and 100 parts of deionized water were stirred in a dual planet mixer under a condition of 30 r/min revolution and 1,500 r/min rotation for 4 h in vacuum to form a uniform slurry, then the slurry was coated on the current collector B2-3 and baked at 100°C for 30 min to dry, rolled under 40 tons of rolling pressure and cut into a required negative electrode sheet.

### Comparative Example 2-1

1) an aluminum foil current collector with a thickness of 9 µm was used to replace the current collector A2-1, a copper foil current collector with a thickness of 9 µm was used to replace the current collector B2-1. And the positive electrode sheet and the negative electrode sheet were obtained by using the same material and preparation process as in Example 2-1.

### Comparative Example 2-2

1) 100 parts of polypropylene (PP) were melted and mixed at 265°C for 30 min to obtain a slurry. The slurry was extruded, stretched and cooled in turn to obtain a PP film layer with a thickness of 5 µm.
2) the upper surface and the lower surface of the PP film layer were respectively electroplated with a metal aluminum layer with a thickness of 2 µm by a vacuum evaporation method to obtain a current collector C2 with a total thickness of 9 µm used as a positive electrode current collector material.
   the upper surface and the lower surface of the PP film layer were respectively electroplated with a metal copper layer with a thickness of 2 µm by a vacuum evaporation method to obtain a current collector D2 with a total thickness of 9 µm used as a negative electrode current collector material.

The current collector C2 was used to replace the current collector A2-1, the current collector D2 was used to replace the current collector B2-1. And the positive electrode sheet and the negative electrode sheet were obtained by using the same materials and preparation process as in Example 2-1.

### Example 3-1

In the current collector provided by the present embodiment, the functional film layer was obtained from 98 parts of polyethylene glycol terephthalate (PET) and 2 parts of triphenyl phosphate, and stainless-steel layers were provided on an upper surface and a lower surface of the functional film layer used as a positive electrode current collector material, and metal copper layers were provided on the upper surface and the lower surface of the functional film layer used as a negative electrode current collector material.

The current collector can be prepared according to the method as follows:
1) 98 parts of polyethylene glycol terephthalate (PET) and 2 parts of triphenyl phosphate were melted and mixed at 250°C for 30 min to obtain a mixed slurry. The mixed slurry was extruded, stretched and cooled in turn to obtain a functional film layer with a thickness of 3 µm.
   after testing, a fire-retardant grade of the functional film layer F3-1 is V1 grade, and an oxygen index is 28.
2) the upper surface and the lower surface of the functional film layer were respectively bonded with a stainless-steel layer by a bonding method to obtain a current collector A3-1 with a total thickness of 13 µm used as a positive electrode current collector material.
   the upper surface and the lower surface of the functional film layer were electroplated with a metal copper layer with a thickness of 3 µm by the electroplating method to obtain a current collect B3-1 with a total thickness of 9 µm used as a negative electrode current collector material.

After the positive and negative electrode current collector materials were obtained according to the above method, 97 parts of high-nickel ternary positive electrode (NCM811), 1.5 parts of acetylene black conductive agent, 1.5 parts of PVDF binder, and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A3-1 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of silicon carbon functional negative electrode, 1 part of acetylene black conductive agent, 1 part of sodium carboxymethyl cellulose (CMC), 1 part of styrene butadiene rubber (SBR) binder, and 100 parts of deionized water were stirred in a dual planet mixer under a condition of 30 r/min revolution and 1,500 r/min rotation for 4 h in vacuum to form a uniform slurry, then the slurry was coated on the current collector B3-1 and baked at 100°C for 30 min to dry, rolled under 40 tons of rolling pressure and cut into a required negative electrode sheet.

### Example 3-2

In the current collector provided by the present embodiment, the functional film layer was obtained from 98 parts of polyethylene glycol terephthalate (PET) and 2 parts of triphenyl phosphate, and stainless-steel layers were provided on an upper surface and a lower surface of the functional film layer used as a positive electrode current collector material, and metal copper layers were provided on the upper surface and the lower surface of the functional film layer used as a negative electrode current collector material.

The current collector can be prepared according to the method as follows:
1) 98 parts of polyethylene glycol terephthalate (PET) and 2 parts of triphenyl phosphate were melted and mixed at 250°C for 30 min to obtain a mixed slurry. The mixed slurry was extruded, stretched and cooled in turn to obtain a functional film layer with a thickness of 5 µm.
   after testing, a fire-retardant grade of the functional film layer is V1 grade, and an oxygen index is 28.
2) the upper surface and the lower surface of the functional film layer were respectively bonded with a stainless-steel layer with a thickness of 5 µm by a bonding method to obtain a current collector A3-2 with a total thickness of 15 µm used as a positive electrode current collector material.
   the upper surface and the lower surface of functional film layer were respectively electroplated with a metal cooper layer with a thickness of 3 µm by electroplating method to obtain a current collector B3-2 with a total thickness of 11 µm used as a negative electrode current collector material.

After the positive and negative electrode current collector materials were obtained according to the above method, 97 parts of high-nickel ternary positive electrode (NCM811), 1.5 parts of acetylene black conductive agent, 1.5 parts of PVDF binder, and 60 parts of N-methylpyrrolidone (NMP) were stirred in a dual planet mixer under a condition of 30 r/min revolution and 1,500 r/min rotation for 4 h in vacuum to form a uniform slurry, then the slurry was coated on the current collector A3-2 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of silicon carbon functional negative electrode, 1 part of acetylene black conductive agent, 1 part of sodium carboxymethyl cellulose (CMC), 1 part of styrene butadiene rubber (SBR) binder, and 100 deionized water were stirred in a dual planet mixer under a condition of 30 r/min revolution and 1,500 r/min rotation for 4 h in vacuum to form a uniform slurry, then the slurry was coated on the current collector B3-2 and baked at 100°C for 30 min to dry, rolled under 40 tons of rolling pressure and cut into a required negative electrode sheet.

### Examples 3-3

In the current collector provided by the present embodiment, the functional film layer was obtained from 98 parts of polyethylene glycol terephthalate (PET) and 2 parts of triphenyl phosphate, and stainless-steel layers were provided on an upper surface and a lower surface of the functional film layer used as a positive electrode current collector material, and metal copper layers were provided on the upper surface and the lower surface of the functional film layer used as a negative electrode current collector material.

The current collector can be prepared according to the method as follows:
1) 98 parts of polyethylene glycol terephthalate (PET) and 2 parts of triphenyl phosphate were melted and mixed at 265°C for 30 min to obtain a mixed slurry. The mixed slurry was extruded, stretched and cooled in turn to obtain a functional film layer with a thickness of 10 µm.
   after testing, a fire-retardant grade of the functional film layer is V1 grade, and an oxygen index is 28.
2) the upper surface and the lower surface of the functional film layer were respectively bonded with a stainless-steel layer with a thickness of 5 µm by a bonding method to obtain a current collector A3-3 with a total thickness of 20 µm used as a positive electrode current collector material.
   the upper surface and the lower surface of the functional film layer were respectively electroplated with a metal copper layer with a thickness of 3 µm by an electroplating method to obtain a current collector B3-3 with a total thickness of 16 µm used as a negative electrode current collector material.

After the positive and negative electrode current collector materials were obtained according to the above method, 97 parts of high-nickel ternary positive electrode (NCM811), 1.5 parts of acetylene black conductive agent, 1.5 parts of PVDF binder, and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A3-3 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of silicon carbon functional negative electrode, 1 part of acetylene black conductive agent, 1 part of sodium carboxymethyl cellulose (CMC), 1 part of styrene butadiene rubber (SBR) binder, and 100 deionized water were stirred in a dual planet mixer under a condition of 30 r/min revolution and 1,500 r/min rotation for 4 h in vacuum to form a uniform slurry, then the slurry was coated on the current collector B3-3 and baked at 100°C for 30 min to dry, rolled under 40 tons of rolling pressure and cut into a required negative electrode sheet.

### Comparative Example 3-1

1) a stainless-steel current collector with a thickness of 13 µm was used to replace the current collector A3-1, a copper foil current collector with a thickness of 9 µm was used to replace the current collector B3-1. And the positive electrode sheet and the negative electrode sheet were obtained by using the same material and preparation process as in Example 3-1.

### Comparative Example 3-2

1) 100 parts of polyethylene glycol terephthalate (PET) was melted and mixed at 265°C for 30 min to obtain a slurry. The slurry was extruded, stretched and cooled in turn to obtain a PET film layer with a thickness of 3 µm.
2) the upper surface and the lower surface of the PET film layer were respectively bonded with a stainless-steel layer with a thickness of 5 µm by a bonding method to obtain a current collector C3-1 with a total thickness of 13 µm used as a positive electrode current collector material.
   the upper surface and the lower surface of the PET film layer were respectively electroplated with a metal copper layer with a thickness of 3 µm to obtain a current collector D3-1 with a total thickness of 9 µm used as a negative electrode current collector material.

The current collector C3-1 was used to replace the current collector A3-1, the current collector D3-1 was used to replace the current collector B3-1. And the positive electrode sheet and the negative electrode sheet were obtained by using the same material and preparation process as in Example 3-1.

### Comparative Example 3-3

1) a stainless-steel current collector with a thickness of 15 µm was used to replace the current collector A3-2, a copper foil current collector with a thickness of 11 µm was used to replace the current collector B3-2. And the positive electrode sheet and the negative electrode sheet were obtained by using the same material and preparation process as in Example 3-2.

### Comparative Example 3-4

1) 100 parts of polyethylene glycol terephthalate (PET) was melted and mixed at 265°C for 30 min to obtain a slurry. The slurry was extruded, stretched and cooled in turn to obtain a PET film layer with a thickness of 5 µm.
2) the upper surface and the lower surface of the PET film layer were bonded with a stainless-steel layer with a thickness of 5 µm by a bonding method to obtain a current collector C3-2 with a total thickness of 15 µm used as a positive electrode current collector material.
   the upper surface and the lower surface of the functional film layer were electroplated with a metal copper layer with a thickness of 3 µm by an electroplating method to obtain a current collector D3-2 with a total thickness of 11 µm used as a negative electrode current collector material.

The current collector C3-2 was used to replace the current collector A3-2, and the current collector D3-2 was used to replace the current collector B3-2. And the positive electrode sheet and the negative electrode sheet were obtained by using the same material and preparation process as in Example 3-2.

### Comparative Example 3-5

1) a stainless-steel current collector with a thickness of 20 µm was used to replace the current collector A3-3, a copper foil current collector with a thickness of 16 µm was used to replace the current collector B3-3. And the positive electrode sheet and the negative electrode sheet were obtained by using the same material and preparation process as in Example 3-3.

### Comparative Example 3-6

1) 100 parts of polyethylene glycol terephthalate (PET) was melted and mixed at 265°C for 30 min to obtain a slurry. The slurry was extruded, stretched and cooled in turn to obtain a PET film layer with a thickness of 10 µm.
2) the upper surface and the lower surface of the PET film layer were bonded with a stainless-steel layer with a thickness of 5 µm by a bonding method to obtain a current collector C3-3 with a total thickness of 20 µm used as a positive electrode current collector material.
   the upper surface and the lower surface of the PET film layer were respectively electroplated with a metal copper layer with a thickness of 3 µm by an electroplating method to obtain a current collector D3-3 with a total thickness of 16 µm used as a negative electrode current collector material.

The current collector C3-3 was used to replace the current collector A3-3, the current collector D3-3 was used to replace the current collector B3-3. And the positive electrode sheet and the negative electrode sheet were obtained by using the same material and preparation process as in Example 3-3.

### Examples 4-1

In the current collector provided by the present embodiment, the functional film layer was obtained from 99 parts of polybutylene terephthalate (PBT) and 1 part of melamine urate. The metal aluminum layers were provided on an upper surface and a lower surface of the functional film layer used as a positive electrode current collector material, and the metal silver layers was provided on the upper surface and lower surface of the functional film layer used as a negative electrode current collector material.

The current collector can be prepared according to the method as follows:
1) 99 parts of polybutylene terephthalate (PBT) and 1 part of melamine urate were melted and mixed at 270°C for 25 min to obtain a mixed slurry. The mixed slurry was extruded, stretched and cooled in turn to obtain a functional film layer with a thickness of 3 µm.
   after testing, a fire-retardant grade of the functional film layer F4 is V1 grade, and an oxygen index is 28.
2) the upper surface and the lower surface of the functional film layer were respectively electroplated with a metal aluminum layer with a thickness of 0.1 µm by a vacuum evaporation method to obtain a current collector A4-1 with a total thickness of 3.2 µm use as a positive electrode current collector material.
   the upper surface and the lower surface of the functional film layer were electroplated with a metal silver layer with a thickness of 0.1 µm by an electroplating method to obtain a current collector B4-1 with a total thickness of 3.2 µm used as a negative electrode current collector material.

After the positive and negative electrode current collector material were obtained according to the above method, 97 parts of ternary positive electrode (NCM622), 1.5 parts of acetylene black conductive agent, 1.5 parts of PVDF binder, and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A4-1 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of graphite negative electrode, 1 part of acetylene black conductive agent, 1 part of sodium carboxymethyl cellulose (CMC), 1 part of styrene butadiene rubber (SBR) binder, and 100 parts of deionized water stirred in a dual planet mixer under a condition of 30 r/min revolution and 1,500 r/min rotation for 4 h in vacuum to form a uniform slurry, then the slurry was coated on the current collector B4-1 and baked at 100°C for 30 min to dry, rolled under 40 tons of rolling pressure and cut into a required negative electrode sheet.

### Example 4-2

In the current collector provided by the present embodiment, the functional film layer was obtained from 99 parts of polybutylene terephthalate (PBT) and 1 part of melamine urate, and metal aluminum layers were provided on an upper surface and a lower surface of the functional film layer used as a positive electrode current collector material, and metal silver layers was provided on the upper surface and the lower surface of the functional film layer used as a negative electrode current collector material.

The current collector can be prepared according to the method as follows:
1) 99 parts of polybutylene terephthalate (PBT) and 1 part of melamine urate were melted and mixed at 270°C for 25 min to obtain a mixed slurry. The mixed slurry was extruded, stretched and cooled in turn to obtain a functional film layer with a thickness of 3 µm.
   after testing, a fire-retardant grade of the functional film layer F4 is V1 grade, and an oxygen index is 28.
2) the upper surface and the lower surface of functional film layer were respectively electroplated with a metal aluminum layer with a thickness of 0.5 µm by a vacuum evaporation method to obtain a current collector A4-2 with a total thickness of 4 µm used as a positive electrode current collector material.
   the upper surface and the lower surface of the functional film layer were electroplated with a metal silver layer with a thickness of 0.5 µm by an electroplating method to obtain a current collector B4-2 with a total thickness of 4 µm used as a negative electrode current collector material.

After the positive and negative electrode current collector material were obtained according to the above method, 97 parts of ternary positive electrode (NCM622), 1.5 parts of acetylene black conductive agent, 1.5 parts of PVDF binder, and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A4-2 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of graphite negative electrode, 1 part of acetylene black conductive agent, 1 part of sodium carboxymethyl cellulose (CMC), 1 part of styrene butadiene rubber (SBR) binder, and 100 parts of deionized water were stirred in a dual planet mixer under a condition of 30 r/min revolution and 1,500 r/min rotation for 4 h in vacuum to form a uniform slurry, then the slurry was coated on the current collector B4-2 and baked at 100°C for 30 min to dry, rolled under 40 tons of rolling pressure and cut into a required negative electrode sheet.

### Examples 4-3

In the current collector provided by the present embodiment, the functional film layer was obtained from 99 parts of polybutylene terephthalate (PBT) and 1 part of melamine urate, and metal aluminum layers were provided on an upper surface and a lower surface of the functional film layer used as a positive electrode current collector material, and metal silver layers were provided on the upper surface and the lower surface of the functional film layer used as a negative electrode current collector material.

The current collector can be prepared according to the method as follows:
1) 99 parts of polybutylene terephthalate (PBT) and 1 part of melamine urate were melted and mixed at 270°C for 25 min to obtain a mixed slurry. The mixed slurry was extruded, stretched and cooled in turn to obtain a functional film layer with a thickness of 3 µm.
   after testing, a fire-retardant grade of the functional film layer is V1 grade, and an oxygen index is 28.
2) the upper surface and the lower surface of the functional film layer were respectively electroplated with a metal aluminum layer with a thickness of 2 µm by a vacuum evaporation method to obtain a current collector A4-3 with a total thickness of 7 µm used as a positive electrode current collector material.
   the upper surface and the lower surface of the functional film layer were electroplated with a metal silver layer with a thickness of 2 µm by a vacuum evaporation method to obtain a current collector B4-3 with a total thickness of 7 µm used as a negative electrode current collector material.

After the positive and negative electrode current collector materials were obtained according to the above method, 97 parts of ternary positive electrode (NCM622), 1.5 parts of acetylene black conductive agent, 1.5 parts of PVDF binder, and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A4-3 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of graphite negative electrode, 1 part of acetylene black conductive agent, 1 part of sodium carboxymethyl cellulose (CMC), 1 part of styrene butadiene rubber (SBR) binder, and 100 parts of deionized water were stirred in a dual planet mixer under a condition of 30 r/min revolution and 1,500 r/min rotation for 4 h in vacuum to form a uniform slurry, then the slurry was coated on the current collector B4-3 and baked at 100°C for 30 min to dry, rolled under 40 tons of rolling pressure and cut into a required negative electrode sheet.

### Example 4-4

In the current collector provided by the present embodiment, the functional film layer was obtained from 99 parts of polybutylene terephthalate (PBT) and 1 part of melamine urate, and metal aluminum layers were provided on an upper surface and a lower surface of the functional film layer used as a positive electrode current collector material, and metal silver layers were provided on the upper surface and the lower surface of the functional film layer used as a negative electrode current collector material.

The current collector can be prepared according to the method as follows:
1) 99 parts polybutylene terephthalate (PBT) and 1 part of melamine urate were melted and mixed at 270°C for 25 min to obtain a mixed slurry. The mixed slurry was extruded, stretched and cooled in turn to obtain a functional film layer with a thickness of 3 µm.
   after testing, a fire-retardant grade of the functional film layer is V1 grade, and an oxygen index is 28.
2) the upper surface and the lower surface of functional film layer were respectively electroplated with a metal aluminum layer with a thickness of 10 µm by a vacuum evaporation method to obtain a current collector A4-4 with a total thickness of 23 µm used as a positive electrode current collector material.

The upper surface and the lower surface of the functional film layer were respectively electroplated with a metal silver layer with a thickness of 10 µm by a vacuum evaporation method to obtain a current collector B4-4 with a total thickness of 23 µm used as a negative electrode current collector material.

After the positive and negative electrode current collector materials were obtained according to the above method, 97 parts of ternary positive electrode (NCM622), 1.5 parts of acetylene black conductive agent, 1.5 parts of PVDF binder, and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A4-4 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of graphite negative electrode, 1 part of acetylene black conductive agent, 1 part of sodium carboxymethyl cellulose (CMC), 1 part of styrene butadiene rubber (SBR) binder, and 100 parts of deionized water were stirred in a dual planet mixer under a condition of 30 r/min revolution and 1,500 r/min rotation for 4 h in vacuum to form a uniform slurry, then the slurry was coated on the current collector B4-4 and baked at 100°C for 30 min to dry, rolled under 40 tons of rolling pressure and cut into a required negative electrode sheet.

### Comparative Example 4-1

1) a metal aluminum current collector with a thickness of 3.2 µm was used to replace the current collector A4-1, a copper foil current collector with a thickness of 3.2 µm was used to replace the current collector B4-1. And a positive and a negative electrode sheet were obtained by using the same material and preparation process as in Example 4-1.

### Comparative Example 4-2

1) 100 parts of polybutylene terephthalate (PBT) were melted and mixed at 270 °C for 25 min to obtain a slurry. The slurry extruded, stretched and cooled in turn to obtain a PBT film layer with a thickness of 3 µm.
2) the upper surface and the lower surface of the PET film layer were respectively electroplated with a metal aluminum layer with a thickness of 0.1 µm to obtain a current collector C4-1 with a total thickness of 3.2 µm used as a positive electrode current collector material.
   the upper surface and the lower surface of the functional film layer were respectively electroplated with a metal silver layer with a thickness of 0.1 µm to obtain a current collector D4-1 with a total thickness of 3.2 µm used as a negative electrode current collector material.

The current collector C4-1 was used to replace the current collector A4-1, the current collector D4-1 was used to replace the current collector B4-1. And the positive and the negative electrode sheet were obtained by using the same materials and preparation process as in Example 4-1.

### Comparative Example 4-3

1) a metal aluminum current collector with a thickness of 4 µm was used to replace the current collector A4-2, a copper foil current collector with a thickness of 4 µm was used to replace the current collector B4-2. And the positive electrode sheet and the negative electrode sheet were obtained by using the same material and preparation process as in Example 4-2.

### Comparative Example 4-4

1) 100 parts of polyethylene glycol terephthalate (PET) was melted and mixed at 270°C for 25 min to obtain a slurry. The slurry was extruded, stretched and cooled in turn to obtain a PET film layer with a thickness of 3 µm.
2) the upper surface and the lower surface of the PET film layer were respectively electroplated with a metal aluminum layer with a thickness of 0.5 µm by a vacuum evaporation method to obtain a current collector C4-2 with a total thickness of 4 µm used as a positive electrode current collector material.
   the upper surface and the lower surface of the PET film layer were electroplated with a metal silver layer with a thickness of 0.5 µm by an electroplating method to obtain a current collector D4-2 with a total thickness of 4 µm used as a negative electrode current collector material.

The current collector C4-2 was used to replace the current collector A4-2, and the current collector D4-2 was used to replace the current collector B4-2. And the positive electrode sheet and the negative electrode sheet were obtained by using the same material and preparation process as in Example 4-2.

### Comparative Example 4-5

1) a metal aluminum current collector with a thickness of 7 µm was used to replace the current collector A4-3, a copper foil current collector with a thickness of 7 µm was used to replace the current collector B4-3. And a positive electrode sheet and a negative electrode sheet were obtained by using the same material and preparation process as in Example 4-3.

### Comparative Example 4-6

1) 100 parts of polybutylene terephthalate (PBT) was melted mixed at 270°C for 25 min to obtain a slurry. The slurry was extruded, stretched and cooled in turn to obtain a PBT film layer with a thickness of 3 µm.
2) an upper surface and a lower surface of the PBT film layer were respectively electroplated with a metal aluminum layer with a thickness of 2 µm to obtain a current collector C4-3 with a total thickness of 7 µm used as a positive electrode current collector material.
   the upper and lower surfaces of the PBT film layer were electroplated with a metal silver layer with a thickness of 2 µm to obtain a current collector D4-3 with a total thickness of 7 µm used as a negative electrode current collector material.

The current collector C4-3 was used to replace the current collector A4-3, and the current collector D4-3 was used to replace the current collector B4-3. And the positive electrode sheet and the negative electrode sheet were obtained by using the same material and preparation process as in Example 4-3.

### Comparative Example 4-7

1) an aluminum foil current collector with a thickness of 23 µm was used to replace the current collector A4-4, a copper foil current collector with a thickness of 23 µm was used to replace the current collector B4-4. And the positive electrode sheet and the negative electrode sheet were obtained by using the same material and preparation process as in Example 4-4.

### Comparative Example 4-8

1) 100 parts of polybutylene terephthalate (PBT) was melted and mixed at 270°C for 25 min to obtain a slurry. The slurry was extruded, stretched and cooled in turn to obtain a PBT film layer with a thickness of 3 µm.
2) an upper surface and a lower surface of the PBT film layer were respectively electroplated with a metal aluminum layer with a thickness of 10 µm by a vacuum evaporation method to obtain a current collector C4-4 with a total thickness of 23 µm used as a positive electrode current collector material.
   the upper surface and the lower surface of the PBT film layer were respectively electroplated with a metal silver layer with a thickness of 10 µm by a vacuum evaporation method to obtain a current collector D4-4 with a total thickness of 23 µm used as a negative electrode current collector material.

The current collector C4-4 was used to replace the current collector A4-4, the current collector D4-4 was used to replace the current collector B4-4. And the positive electrode sheet and the negative electrode sheet were obtained by using the same material and preparation process as in Example 4-4.

### Example 5

In the current collector provided by the present embodiment, the functional film layer was obtained from 99 parts of polyvinylidene fluoride (PVDF) and 1 part of tetrabromobisphenol A. The metal aluminum layers were provided on an upper surface and a lower surface of the functional film layer used as a positive electrode current collector material, and metal nickel layers was provided on the upper surface and the lower surface of the functional film layer used a negative electrode current collector material.

The current collector can be prepared according to the method as follows:
1) 99 parts of polyvinylidene fluoride (PVDF) were dissolved in N-methyl pyrrolidone (NMP), and then one part of tetrabromobisphenol A was added to obtain a mixed slurry. The mixed slurry was coated and dried in turn to obtain a functional film layer with a thickness of 10 µm.
   after testing, a fire-retardant grade of the functional film layer F5 is 5VA grade, and an oxygen index is 78.
2) the upper surface and the lower surface of the functional film layer were respectively electroplated with a metal aluminum layer with a thickness of 1 µm by a vacuum evaporation method to obtain a current collector A5 with a total thickness of 12 µm used as a positive electrode current collector material.
   the upper surface and the lower surface of the functional film layer were respectively electroplated with a metal nickel layer with a thickness of 0.5 µm and a metal copper layer with a thickness of 0.5 µm by an electroplating method to obtain a current collector B5 with a total thickness of 12 µm used as a negative electrode current collector material.

After the positive and negative electrode current collector materials were obtained according to the above method, 97 parts of ternary positive electrode (NCM523), 1.5 parts of acetylene black conductive agent, 1.5 parts of PVDF binder, and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A5 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of graphite negative electrode, 1 part of acetylene black conductive agent, 1 part of sodium carboxymethyl cellulose (CMC), 1 part of styrene butadiene rubber (SBR) binder, and 100 parts of deionized water were stirred in a dual planet mixer under a condition of 30 r/min revolution and 1,500 r/min rotation for 4 h in vacuum to form a uniform slurry, then the slurry was coated on the current collector B5 and baked at 100°C for 30 min to dry, rolled under 40 tons of rolling pressure and cut into a required negative electrode sheet.

### Comparative Example 5-1

1) a metal aluminum current collector with a thickness of 12 µm was used to replace the current collector A5, a copper foil current collector with a thickness of 12 µm was used to replace the current collector B5. And the positive electrode sheet and the negative electrode sheet were obtained by using the same material and preparation process as in Example 5.

### Comparative Example 5-2

1) 99 parts of polyvinylidene fluoride (PVDF) were dissolved in N-methyl pyrrolidone (NMP) to obtain a slurry. The mixed slurry was coated and dried in turn to obtain a PVDF film layer with a thickness of 10 µm.
2) an upper surface and a lower surface of the PVDF film layer were respectively electroplated with a metal aluminum layer with a thickness of 1 µm by a vacuum evaporation method to obtain a current collector C5 with a total thickness of 12 µm used as a positive electrode current collector material.
   the upper surface and the lower surface of the PVDF film layer were respectively electroplated with a metal nickel layer with a thickness of 0.5 µm and a metal copper layer with a thickness of 0.5 µm by an electroplating method to obtain a current collector D5 with a total thickness of 12 µm used as a negative electrode current collector material.

The current collector C5 was used to replace the current collector A5, the current collector D5 was used to replace the current collector B5. And the positive electrode sheet and the negative electrode sheet were obtained by using the same material and preparation process as in Example 5.

### Example 6

In the current collector provided by the present embodiment, the functional film layer was obtained from 99.5 parts of polyvinyl chloride (PVC) and 0.5 parts of melamine polyphosphate. The metal aluminum layers were provided on an upper surface and a lower surface of the functional film layer used as a positive electrode current collector material, and metal copper layers were provided on the upper surface and the lower surface of the functional film layer used as a negative electrode current collector material.

The current collector can be prepared as follows:
1) 99.5 parts of polyvinyl chloride (PVC) and 0.5 parts of melamine polyphosphate were melted and mixed at 220°C for 20 min to obtain a mixed slurry. The slurry was extruded, stretched and cooled in turn to obtain a functional film layer with a thickness of 12 µm.
   after testing, a fire-retardant grade of the functional film layer is V0 grade, and an oxygen index is 47.
2) the upper surface and the lower surface of the functional film layer were respectively electroplated with a metal aluminum layer with a thickness of 1.5 µm by a vacuum evaporation method to obtain a current collector A6 with a total thickness of 15 µm used as a positive electrode current collector material.
   the upper surface and the lower surface of the functional film layer were respectively electroplated with a metal copper layer with a thickness of 1.5 µm by an electroplating method to obtain a current collector B6 with a total thickness of 15 µm used as a negative electrode current collector material.

After the positive and negative electrode current collector materials were obtained according to the above methods, 97 parts of ternary positive electrodes (NCA), 1.5 parts of acetylene black conductive agent, 1.5 parts of PVDF binder, and 60 parts of N-methyl pyrrolidone (NMP) were stirred in a dual planet mixer under a condition of 30 r/min revolution and 1,500 r/min rotation for 4 h in vacuum to form a uniform slurry, then the slurry was coated on the current collector A6 and baked at 130°C for 30 min to dry, rolled under 40 tons of rolling pressure and cut into a required positive electrode sheet according to a conventional preparation process of the lithium-ion battery positive electrode.

According to a conventional preparation process of the lithium-ion battery negative electrode, 97 parts of silicon monoxide (20wt%) + graphite (80wt%) composite negative electrode, 1 part of acetylene black conductive agent, 1 part of sodium carboxymethyl cellulose (CMC), 1 part of styrene butadiene rubber (SBR) binder, and 100 parts of deionized water were stirred in a dual planet mixer under a condition of 30 r/min revolution and 1,500 r/min rotation for 4 h in vacuum to form a uniform slurry, then the slurry was coated on the current collector B6 and baked at 100°C for 30 min to dry, rolled under 40 tons of rolling pressure and cut into a required negative electrode sheet.

### Comparative Example 6-1

1) a metal aluminum current collector with a thickness of 15 µm was used to replace the current collector A6, a copper foil current collector with a thickness of 15 µm was used to replace the current collector B6. And the positive electrode sheet and the negative electrode sheet were obtained by using the same material and preparation process as in Example 6.

### Comparative Example 6-2

1) 99.5 parts of polyvinyl chloride (PVC) was melted and mixed at 220°C for 20 min to obtain a slurry. And the slurry was extruded from an extruding equipment. A PVC film layer with a thickness of 12 µm was obtained by extruding, stretching and cooling in turn.
2) the upper surface and the lower surface of the PVC film layer was respectively electroplated with a metal aluminum layer with a thickness of 1.5 µm by a vacuum evaporation method to obtain a current collector C6 with a total thickness of 15 µm used as a positive electrode current collector material.
   the upper surface and the lower surface of the PVC film layer were respectively electroplated with a metal cooper layer with a thickness of 1.5 µm by an electroplating method to obtain a current collector D6 with a total thickness of 15 µm used as a negative electrode current collector material.

The current collector C6 was used to replace the current collector A6, the current collector D6 was used to replace the current collector B6. And the positive electrode sheet and the negative electrode sheet were obtained by using the same material and preparation process as in Example 6.

The lithium-ion batteries are prepared from the positive electrode sheet and negative electrode sheet of the above Examples and the Comparative Examples. Specifically, the lithium-ion batteries are prepared by combining the positive electrode sheet and negative electrode sheet with polyethylene (PE) porous membrane and lithium-ion battery electrolyte through a conventional preparation process of the lithium-ion battery.

After fully charged the lithium-ion battery obtained in the above Examples and Comparative Examples, three safety tests of acupuncturing, heating and overcharging of the batteries are tested, 10 batteries in each group are tested in parallel, and the pass rate is calculated. The test method refers to GB/T 31485-2015 standard, and the test results are shown in Table 1.

**Table 1: Safety test results of the lithium-ion batteries provided by the Examples and Comparative Examples**

| | Pass rate of acupuncturing (%) | Pass rate of heating (%) | Pass rate of overcharging (%) |
|---|---|---|---|
| Example 1 | 100% | 100% | 100% |
| Comparative Example 1-1 | 0 | 0 | 0 |
| Comparative Example 1-2 | 10% | 20% | 20% |
| Example 2-1 | 100% | 80% | 90% |
| Example 2-2 | 100% | 90% | 100% |
| Example 2-3 | 100% | 100% | 100% |
| Comparative Example 2-1 | 0 | 0 | 0 |
| Comparative Example 2-2 | 10% | 10% | 10% |
| Example 3-1 | 100% | 80% | 80% |
| Example 3-2 | 100% | 100% | 100% |
| Example 3-3 | 100% | 100% | 100% |
| Comparative Example 3-1 | 0 | 0 | 0 |
| Comparative Example 3-2 | 10% | 10% | 10% |
| Comparative Example 3-3 | 10% | 0 | 0 |
| Comparative Example 3-4 | 20% | 10% | 10% |
| Comparative Example 3-5 | 10% | 0 | 0 |
| Comparative Example 3-6 | 30% | 20% | 20% |
| Example 4-1 | 100% | 90% | 100% |
| Example 4-2 | 100% | 100% | 100% |
| Example 4-3 | 100% | 90% | 90% |
| Example 4-4 | 80% | 70% | 80% |
| Comparative Example 4-1 | 0 | 0 | 0 |
| Comparative Example 4-2 | 30% | 10% | 20% |
| Comparative Example 4-3 | 0 | 0 | 0 |
| Comparative Example 4-4 | 20% | 10% | 20% |
| Comparative Example 4-5 | 0 | 0 | 0 |
| Comparative Example 4-6 | 10% | 0 | 10% |
| Comparative Example 4-7 | 0 | 0 | 0 |
| Comparative Example 4-8 | 10% | 0 | 0 |
| Example 5 | 100% | 100% | 100% |
| Comparative Example 5-1 | 10% | 0 | 10% |
| Comparative Example 5-2 | 30% | 10% | 20% |
| Example 6 | 100% | 100% | 100% |
| Comparative Example 6-1 | 0 | 0 | 0 |
| Comparative Example 6-2 | 10% | 0 | 0 |

It can be seen from Table 1 that, the safety performance of lithium-ion battery prepared by the current collector of the present invention has been significantly improved, especially the pass rate of safety performance tests such as acupuncturing, heating and overcharging has been significantly improved.

Finally, it should be explained that the above embodiments are only used to illustrate the technical scheme of the present invention, rather than limit it; although the present invention is described in detail with reference to the above embodiments, those ordinary skilled in the art should understand that they can still modify the technical solutions recorded in the above embodiments, or substitute some or all of them with the same technical features; these modifications or substitutions do not make the essence of the corresponding technical scheme depart from the scope of the technical schemes of the embodiments of the present invention.

## Claims

1. A current collector, wherein the current collector comprises a functional film layer, a metal layer provided on an upper surface of the functional film layer and a metal layer provided on a lower surface of the functional film layer;
wherein the functional film layer comprises a fire retardant.

2. The current collector according to claim 1, wherein the fire retardant is selected from one or more of antimony trioxide, magnesium hydroxide, aluminum hydroxide, hydroxyl-aluminum, zinc phosphate, zinc borate, ammonium polyphosphate, tributyl phosphate, tris(2-ethylhexyl) phosphate, tris(2-chloroethyl) phosphate, tris(2,3-dichloropropyl) phosphate, tris(2,3-dibromopropyl) phosphate, cresyl diphenyl phosphate, tricresyl phosphate, triphenyl phosphate, 2-ethylhexyl diphenyl phosphate, tris(dibromopropyl) phosphate, octabromodiphenyl oxide, pentabromoethylbenzene, tetrabromobisphenol A, chlordane anhydride, cyclophosphamide polymer, melamine urate, melamine polyphosphate, pentaerythritol phosphate, and tris(2,4,6-tribromophenoxy)-triazine.

3. The current collector according to claim 1, wherein a mass of the fire retardant is 0.1%-10% of a mass of the functional film layer.

4. The current collector according to claim 1, wherein the functional film layer further comprises a polymer.

5. The current collector according to claim 4, wherein the polymer is selected from one or more of polyethylene, polypropylene, polystyrene, polyvinyl chloride, polystyrene, acrylonitrile-butadiene-styrene copolymer, polyvinyl formal, polyvinyl butyral, polyacrylonitrile, polyvinyl acetate, phenolic resin, polyurethane, polyamide, polyimide, poly-p-phenylene terephthalamide, polyterephthalate, polyethylene glycol terephthalate, polybutylene terephthalate, polycarbonate, polyphenylether, polyformaldehyde, epoxy resin, polytetrafluoroethylene, polyvinylidene fluoride, silicone rubber, polysulfone, and polyethersulfone.

6. A preparation method of a current collector, comprising the following steps:
1) extending a slurry containing a fire retardant to obtain a functional film layer;
2) providing a metal layer on an upper surface of the functional film layer and a metal layer on a lower surface of the functional film layer to obtain a current collector.

7. The preparation method according to claim 6, wherein the slurry further comprises a polymer.

8. The preparation method according to claim 7, wherein step 1) comprises: melting and mixing the polymer and the fire retardant to obtain the slurry, extruding, stretching and cooling the slurry in turn to obtain the functional film layer.

9. The preparation method according to claim 7, wherein step 1) comprises: dissolving the polymer and the fire retardant in a solvent to obtain the slurry, coating and drying the slurry in turn to obtain the functional film layer.

10. A lithium-ion battery, comprising the current collector according to any one of claims 1-5 or the current collector obtained by the preparation method according to any one of claims 6-9.
